# EUROPÄISCHE PATENTSCHRIFT

(11) **EP 3 228 173 B1**
(45) Veröffentlichungstag und Bekanntmachung des Hinweises auf die Patenterteilung: **29.08.2018**
(21) Anmeldenummer: 17401033.0
(22) Anmeldetag: 31.03.2017
(51) Int. Cl.: A01C 17/00

(54) **STEUERSYSTEM FÜR EINEN SCHLEUDERSTREUER UND VERFAHREN**
CONTROL SYSTEM FOR A BROADCASTER AND METHOD
SYSTÈME DE COMMANDE D'ÉPANDEUR CENTRIFUGE ET PROCÉDÉ

(30) Priorität: 08.04.2016 DE 102016106449
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Rahe, Florian, 49504 Lotte (DE); Rüsse, Mario, 49080 Osnabrück (DE)

(56) Entgegenhaltungen:
- EP-A1- 2 556 738

## Beschreibung

Die vorliegende Anmeldung behandelt ein Steuersystem für einen Schleuderstreuer und ein Verfahren entsprechend dem Oberbegriff der unabhängigen Patentansprüche 1 und 13.

Ein derartiger Schleuderstreuer ist beispielsweise durch die EP 2 556 738 A1 offenbart. Diese Schrift zeigt einen Schleudersteuer, welcher den Dünger über zwei Schleuderscheiben ausbringt. Der Schleuderstreuer ist mit einer Vorrichtung zur Messung des Windeinfluss ausgestattet, um den Windeinfluss auf die Verteilung des Düngers abschätzen zu können. Zusätzlich verfügt der Schleudersteuer über mehrere Einrichtungen zur Anpassung der Verteilercharakteristik. So kann die Drehzahl der Schleuderscheiben, der Aufgabepunkt des Düngers auf die Schleuderscheiben und die aufgebrachte Menge eingestellt und geregelt werden. Bei bekannter Windstärke und Windrichtung kann nun der Einfluss des Windes auf den Streufächer ermittelt und eine entsprechende Anpassung der Verteilercharakteristik derart vorgenommen werden, dass sich auch bei Windeinfluss, insbesondere Seitenwind, ein symmetrisches Streubild ergibt. Hierfür ist ein Steuersystem vorgesehen, welches zumindest eine gewünschte Arbeitsbreite und die gemessene Windstärke mit hinterlegten Rechenvorschriften und/oder Modellen in entsprechende Einstellparameter des Schleuderstreuers überführt. Nachteilig an dem bekannten System ist, dass negative Einflüsse ungünstig gewählter Einstellparameter nicht berücksichtigt werden. So kann insbesondere eine zu große Streuscheibendrehzahl dazu führen, dass die gewünschte Verteilercharakteristik nicht erreicht oder aufrechterhalten werden kann. Auch kann eine sehr große Streuscheibendrehzahl dazu führen, dass zur Aufrechterhaltung der gewünschten Arbeitsbreite der Aufgabepunkt des Düngers auf diese Streuscheibe angepasst und das Streubild damit in unerwünschter Weise einseitig verändert werden muss.

Aufgabe der vorliegenden Erfindung ist es daher, eine verbesserte Steuerung der Verteilercharakteristik und ein entsprechendes Verfahren bereitzustellen, um eine symmetrische Verteilcharakteristik zu erhalten.

Diese Aufgabe wird erfindungsgemäß dadurch gelöst, dass im Normalbetrieb bei Erreichen des Grenzwertes für die Drehzahl zumindest einer Schleuderscheibe zur Aufrechterhaltung der gewünschten Arbeitsbreite der Sollwert für den Abwurfwinkel dieser Schleuderscheibe durch das Steuersystem entsprechend angepasst wird und zur Aufrechterhaltung einer symmerischen Verteilcharakteristik die Drehzahl der zweiten Schleuderscheibe und der Sollwert für den Abwurfwinkel der zweiten Schleuderscheibe durch das Steuersystem entsprechend angepasst wird.

Mit Normalbetrieb ist hierbei der Betrieb des Düngersteuers auf einer landwirtschaftlichen Fläche gemeint, welcher sich dadurch auszeichnet, dass die gewünschte Arbeitsbreite der jeweiligen Streuscheiben identisch ist. Es wird also in diesem Normalbetrieb nicht in der Nähe einer Feldgrenze oder eines Vorgewendes oder Flächen gearbeitet, welche nicht mit Dünger beaufschlagt werden sollen. Vom Normalbetrieb unterschieden werden beispielsweise Situationen in denen mittels einer Grenzstreuvorrichtung in einem Grenz-, Rand- oder Grabenstreumodus gearbeitet wird. Dabei wird in der Regel mittels eines Streuschirmes oder verstellbarer Streuschaufeln für eine der beiden Streuscheiben eine veränderte Streucharakteristik erzeugt. Es kann auch beispielsweise durch Anpassung der Drehzahl oder des Aufgabepunktes eine Veränderung der Streucharakteristik erreicht werden.

Mit Grenzwert für die Drehzahl ist hierbei eine Drehzahl gemeint, welche beim Betrieb des Schleuderstreuers nicht überschritten werden soll. Beispielsweise kann durch den durch die erhöhte Abwurfgeschwindigkeit bei Drehzahlen oberhalb des Grenzwertes stark erhöhten Luftwiderstand eine ideale Verteilung verhindert werden. Auch kann die Wahl des Grenzwertes dadurch bedingt sein, dass die Regelung selbst dadurch erschwert wird, dass der verstärkte Einfluss des Luftwiderstandes bei einer Erhöhung der Drehzahl oberhalb des Grenzwertes nur zu einer sehr geringen Änderung der Wurfweite führt. Der Grenzwert kann beispielsweise 1000 1/min betragen. Es ist auch denkbar, dass bei der Wahl des Grenzwertes die zeitliche Trägheit des Regelsystems berücksichtigt wird, sodass der Grenzwert niedriger gewählt wird, beispielsweise 960 1/min, damit bei entsprechender zeitlicher Verzögerung der Regelung der eigentliche Grenzwert nicht überschritten wird.

Zur Anpassung der Verteilercharakteristik in Reaktion auf Sensorsignale, welche als Maß für die Symmetrie der Verteilercharakteristik des Schleudersteuer dienen, werden durch das Steuersystem die regelbaren Parameter des Schleudersteuer eingestellt. Dies kann beispielsweise zu einer Anpassung der Schleuderscheibendrehzahl und/oder des Aufgabepunktes führen.

Tritt beispielsweise eine Asymmetrie derart auf, dass die angestrebte Arbeitsbreite einseitig nicht erreicht wird, so wird zunächst die Drehzahl dieser ersten Schleuderscheibe erhöht. Bei Erreichen des in dem Steuersystem hinterlegten Grenzwertes, kann eine Anpassung der Arbeitsbreite nur durch Erhöhung der Drehzahl der Schleuderscheibe nicht erreicht werden. Entsprechend muss durch Änderung des Sollabwurfwinkels eine alternative Möglichkeit zur Erhöhung der Arbeitsbreite gewählt werden sodass die angestrebte Arbeitsbreite wieder eingestellt werden kann. Eine Änderung des Sollabwurfwinkels führt jedoch in der Regel zu einer veränderten Verteilercharakteristik/ einem veränderten Streubild dieser Schleuderscheibe. Die zweite Schleuderscheibe erfährt nun erfindungsgemäß eine entsprechende Anpassung des Sollabwurfwinkels. Dies dient dazu, die durch die Änderung des Sollabwurfwinkels der ersten Schleuderscheibe veränderte Verteilercharakteristik auf die zweite Schleuderscheibe zu übertragen, sodass wieder eine symmetrische Verteilercharakteristik vorliegt.

Dieses Vorgehen stellt sich als besonders vorteilhaft heraus, da bei der Arbeit mit Schleudersteuern auf einer landwirtschaftlichen Fläche typischerweise durch überlappendes Bearbeiten beim Befahren benachbarter Fahrspuren eine gleichmäßige Ausbringrate, also Ausbringmenge pro Fläche, erreicht wird. Da die Bearbeitung typischerweise durch regelmäßiges hin- und herfahren erfolgt, wird zumindest im Inneren der landwirtschaftlichen Fläche, wo im Normalmodus gearbeitet wird, jeder Ort einmal mit der linken und einmal mit der rechten Streuscheibe mit Dünger beaufschlagt. Liegt nun für die linke im Vergleich zur rechten Streuscheibe eine andere Verteilercharakteristik vor, ist mithin also die Verteilercharakteristik des Schleudersteuer asymmetrisch, so führt dies dazu, dass bei der überlappenden Bearbeitung nicht an jedem Ort durch aufsummieren der bei der Hin- bzw. Herfahrt ausgebrachten Düngermenge die gleiche Gesamtmenge pro Fläche erreicht wird. Dieser Tatsache wird nun dadurch begegnet, dass das Steuersystem zu jedem Zeitpunkt im Normalbetrieb dafür sorgt, dass die Verteilercharakteristik der linken und rechten Streuscheibe unter Berücksichtigung von äußeren Einflüssen möglichst identisch sind, so dass eine symmetrische Verteilcharakteristik des Schleuderstreuers erhalten wird. Die gleiche Verteilercharakteristik für linke und rechte Schleuderscheibe bedeutet hierbei, dass durch spiegeln der Verteilercharakteristik der einen Schleuderscheibe an der zur Fahrtrichtung parallelen Symmetrieachse des Schleudersteuers zumindest annähernd die Verteilercharakteristik der anderen Schleuderscheibe wiedergegeben wird.

In einer vorteilhaften Weiterbildung der Erfindung wird zur Aufrechterhaltung einer symmetrischen Verteilcharakteristik durch jeweilige Verlagerung des Sollabwurfwinkels nach außen durch das Steuersystem von der gewünschten, zumindest annähernd dreiecksförmigen Verteilcharakteristik hin zu einer trapezförmigeren Verteilcharakteristik gewechselt. Mit Verlagerung des Sollabwurfwinkels nach außen ist hierbei gemeint, dass die Arbeitsbreite erhöht wird, der Dünger also weiter vom Schleuderstreuer weggeworfen wird. Im Normalbetrieb ist eine möglichst dreiecksförmige Verteilercharakteristik wünschenswert, da diese beispielsweise unempfindlicher gegenüber Abweichungen von der vorgesehenen Fahrspur ist als eine trapezförmige Verteilercharakteristik. Dies ist dadurch begründet, dass die Änderung, der auf einem bestimmten Ort ausgebrachen Menge bei gleicher Abweichung von der gewünschten Fahrspur bei einer dreiecksförmigen Verteilercharakteristik geringer ausfällt als bei einer trapezförmigen Verteilcharakteristik, da bei gleicher Arbeitsbreite die Steigung der entsprechenden Dreiecksseiten geringer ausfällt als die der Trapezschenkel. Beim Erreichen der maximalen Schleuderscheibendrehzahl kann jedoch die ideale, dreiecksförmige Verteilcharakteristik nicht aufrechterhalten werden. In diesem Fall muss eine Verlagerung des Sollabwurfwinkels nach Außen vorgenommen werden, um die angestrebte Arbeitsbreite weiterhin zu erreichen. Dies führt zu einer eher trapezförmigen Ausformung der jeweiligen Verteilercharakteristik. Dies wird nun ebenfalls für die andere Schleuderscheibe nachvollzogen. Der Sollabwurfwinkel wird in analoger Weise verlagert, um ein symmetrisches Streubild zu erhalten und eine gleichmäßige Ausbringmenge durch überlappendes Arbeiten zu ermöglichen. In Reaktion hierauf muss insbesondere die Drehzahl der zweiten Schleuderscheibe unter Umständen reduziert werden.

In einer vorteilhaften Weiterbildung der Erfindung ist in dem Steuersystem eine Normdrehzahl, als optimale Drehzahl, für beide Schleuderscheiben hinterlegt oder in dieses eingebbar, wobei diese bei Erreichen des Grenzwertes für die Drehzahl entsprechend der Änderung des Sollwertes für den Abwurfwinkel reduziert wird.

Die Normdrehzahl als optimale Drehzahl meint hierbei eine Drehzahl, bei welcher der Streufächer bzw. die Streucharakteristik der jeweiligen Streuscheibe in optimaler und gewünschter Weise ausgeformt ist. Diese kann von der jeweils gewählten Streuscheibe oder von anderen Parametern der Verteilung, wie beispielsweise dem Aufgabepunkt abhängen. Eine optimale Drehzahl kann beispielsweise 900 1/min betragen. Im Unterschied zu der optimalen Drehzahl bezeichnet der Grenzwert für die Drehzahl eine maximale Drehzahl, welche nicht überschritten werden soll.

Im Idealfall bei einer symmetrischen Verteilcharakteristik werden typischerweise beide Streuschaufeln mit der optimalen Drehzahl betrieben. Kommt es nun, beispielsweise durch äußere Einflüsse, zu einer Veränderung der Verteilercharakteristik hin zu einer asymmetrischen Verteilung, kann es zu einer Anpassung der Streuscheibendrehzahl durch das Steuersystem kommen. Die Streuscheibendrehzahl wird beispielsweise einseitig, also bei einer ersten Streuscheibe, erhöht um auf der Seite dieser Streuscheibe eine vergrößerte Wurfweite zu erzielen und die gewünschte Arbeitsbreite wieder zu erreichen. Diese Veränderung kann mit einer Veränderung des Aufgabepunktes einhergehen oder als isolierte Maßnahme stattfinden. Wird nun der hinterlegte Grenzwert für die Drehzahl erreicht, so ist in erfindungsgemäßer Weise vorgesehen, dass die Normdrehzahl durch das Steuersystem reduziert wird. Die optimale Drehzahl wird somit verändert, was in erfindungsgemäßer Weise direkte Auswirkungen auch auf die zweite Streuscheibe hat. Arbeitet die zweite Streuscheibe beispielsweise vor der Reduktion der Normdrehzahl mit einer reduzierten Drehzahl im Vergleich zur ersten Streuscheibe und im Vergleich zur Normdrehzahl, da auftretender Seitenwind bei Einhaltung der optimalen Drehzahl sonst zu einer zu großen Wurfweite führen würde, so wir diese reduzierte Drehzahl durch die Reduktion der Normdrehzahl weiter reduziert. Die hierdurch hervorgerufene Reduktion der Wurfweite wird durch die Anpassung des Aufgabepunktes ausgeglichen mit dem Ziel, ein zu beiden Seiten symmetrisches Streubild bzw. Verteilcharakteristik zu erzeugen. Arbeitet die zweite Streuscheibe zu diesem Zeitpunkt mit der Normdrehzahl oder einer Drehzahl in der Nähe der Normdrehzahl, so führt die Reduktion der Normdrehzahl also ebenfalls zu einer Reduktion der tatsächlichen Drehzahl der zweiten Streuscheibe.

In einer vorteilhaften Weiterbeildung der Erfindung wird zur verbesserten Einstellbarkeit eines symmetrischen Streubildes zusätzlich der Typ der Schleuderscheibe und/oder geometrische Parameter der Schleuderscheiben und/oder deren Streuschaufeln in dem Steuersystem hinterlegt und/oder an dieses übergeben. Beispielsweise kann die maximale Drehzahl durch den Typ der verwendeten Schleuderscheibe und/oder der verwendeten Streuschaufeln bedingt sein, da sich bei gleicher Umdrehungsgeschwindigkeit durch eine veränderte Geometrie von Schleuderscheiben und/oder Streuschaufeln die Abwurfgeschwindigkeit erhöhen oder verringern kann, so dass es vorteilhaft ist, den Typ der Schleuderscheibe und/oder Streuschaufel bei der Regelung zu berücksichtigen.

In einer vorteilhaften Weiterbildung der Erfindung wird zur verbesserten Einstellbarkeit zusätzlich ein Sollwert und/oder Referenzwert für die Wurfweite, vorzugsweise in Abhängigkeit einer Streuscheibendrehzahl und/oder eines bekannten Streuscheibentyps, in dem Steuersystem hinterlegt und/oder in dieses eingegeben. Die Angabe einer charakteristischen Wurfweite möglichst bei bekannter Drehzahl der Schleuderscheibe vereinfacht die Charakterisierung des Streubildes für die entsprechende Schleuderscheibe.

In einer möglichen Ausgestaltung der Erfindung ist ebenfalls ein Grenzwert für den Sollwert des Abwurfwinkels hinterlegt und wird ein Warnsignal ausgegeben und/oder der Streuvorgang beendet, wenn für zumindest eine Schleuderscheibe der Grenzwert für den Abwurfwinkel und/oder der Drehzahl in einem festgelegten Zeitraum für einen festgelegten Anteil des Zeitraumes erreicht oder überschritten wird. Neben der Drehzahl, welche nur in begrenztem Maße zur Veränderung der Verteilcharakteristik variiert werden kann, sind auch dem Sollwert für den Abwurfwinkel Grenzen gesetzt. Durch Berücksichtigung dieser Grenzen können Betriebsbedingungen ermittelt werden, welche beispielsweise hervorgerufen durch zu starken Windeinfluss, einen Betrieb des Schleudersteuer nicht mehr zulassen. Dies kann der Fall sein wenn die Grenzwerte für den Sollabwurfwinkel und/oder die Schleuderscheibendrehzahl für einen vorgegebenen Anteil eines vorgegebenen Zeitraumes überschritten werden. Ist dies der Fall, so können entsprechende Maßnahmen ergriffen werden, beispielsweise kann der Benutzer des Schleudersteuer durch Warnsignale benachrichtigt oder aber der Verteilvorgang automatisch abgebrochen werden.

In einer möglichen Ausgestaltung der Erfindung ist der Sensor zur direkten oder indirekten Bestimmung von Messwerten, aus welchen ein Maß für die Symmetrie der Verteilcharakteristik bezogen auf die Fahrtrichtung des Schleuderstreuers ableitbar ist, als Sensor zur Bestimmung der Windstärke und/oder Windrichtung ausgebildet. Mittels in dem Steuersystem hinterlegter Rechenvorschriften lässt sich anhand der mittels des Sensors ermittelten Windstärke und -richtung der Einfluss auf die Verteilercharakteristik ermitteln und entsprechend die Einstellparameter des Schleudersteuer derart anpassen, dass eine symmetrische Verteilercharakteristik aufrechterhalten werden kann. Der Sensor kann zur direkten Bestimmung der Windstärke und/oder - richtung, beispielsweise mittels Anemomenter und/oder Anemoskop, ausgebildet sein. Es kann jedoch auch durch Rückgriff auf externe Wetterdaten beispielsweise über das Internet und gegebenenfalls die Kombination mit für die aktuell bearbeitete Fläche gespeicherten statistischen Windkarten die am jeweiligen Ort herrschende Windstärke und/oder -richtung bestimmt werden.

In einer möglichen Ausgestaltung der Erfindung kann der Sensor zur direkten oder indirekten Bestimmung von Messwerten, aus welchen ein Maß für die Symmetrie der Verteilcharakteristik bezogen auf die Fahrtrichtung des Schleuderstreuers ableitbar ist, als zumindest ein Sensor, vorzugsweise Radarsensor, oder entsprechendes System von Sensoren zur berührungslosen Charakterisierung mindestens eines Parameters der Verteilcharakteristik, wie vorzugsweise Wurfrichtung und/oder Wurfweite, des Schleuderstreuers ausgebildet sein. Dieser Sensor oder dieses Sensorsystem ist dazu ausgebildet direkt Asymmetrien der Verteilercharakteristik zu ermitteln und kann ergänzend oder alternativ zu einem Sensor zur Erfassung von Windstärke und/oder -richtung verwendet werden.

In einer möglichen Ausgestaltung der Erfindung verfügt der Schleuderstreuer über ein System zur Anpassung des Aufgabepunktes des auszubringenden Guts auf die jeweilige Schleuderscheibe und wird der Aufgabepunkt durch das Steuersystem aus dem jeweiligen Sollwert für den Abwurfwinkel mittels hinterlegter Rechenvorschriften bestimmt und/oder angepasst. Hierdurch lässt sich in einfacher Weise beispielsweise durch Verdrehen des Aufgabepunktes relativ zum Streuscheibenmittelpunkt eine Anpassung des tatsächlichen Abwurfwinkels an einen Sollabwurfwinkel erreichen. Die Auswirkungen auf den tatsächlichen Abwurfwinkel, welche durch das Verdrehen des Aufgabepunktes hervorgerufen werden, lassen sich mittels in dem Steuersystem hinterlegter Rechenvorschriften ermitteln. Beispielsweise wird zur Verlagerung des Sollabwurfwinkels nach außen der Aufgabepunkt für die jeweilige Streuscheibe derart verdreht, dass die Arbeitsbreite erhöht wird, der Dünger also weiter vom Schleuderstreuer weggeworfen wird. Die Richtung der Verdrehung hängt hierbei von der Drehrichtung der jeweiligen Schleuderscheibe ab.

In einer vorteilhaften Weiterbildung erfolgt die Anpassung der Normdrehzahl und/oder aktuellen Schleuderscheibendrehzahl mit einer vorgegebenen Rate, vorzugsweise weniger als 1 *1/min *1/s, durch das Steuersystem. Eine derart moderate Anpassung der aktuellen Schleuderscheibendrehzahl sorgt dafür, dass keine zu abrupten Änderungen der Verteilcharakteristik erfolgen und bei der Bearbeitung benachbarter Fahrspuren eine näherungsweise Gleichverteilung des Düngers durch gleichmäßig überlappende Verteilbereiche gewahrt bleibt.

In einer möglichen Ausgestaltung der Erfindung wird die Reduktion der Normdrehzahl in Abhängigkeit der Messwerte des Sensors, insbesondere der Windstärke und/oder Richtung, durch das Steuersystem durchgeführt. Dies ermöglicht auch bei starken Windstärken und starken Änderungen der Windstärken, also besonders böigem Wind, noch einen gewissen Drehzahlpuffer, so dass nicht bei jeder Änderung der Windstärke durch unerwünschtes Verdrehen des Aufgabepunktes entgegengewirkt werden muss.

In einer vorteilhaften Weiterbildung der Erfindung wird die Normdrehzahl durch das Steuersystem wieder auf den optimalen Wert erhöht, wenn die Windstärke und/oder die Schleuderscheibendrehzahl für einen festgelegten Zeitraum unterhalb eines Grenzwertes verbleibt. Auf diese Weise kann bei abflauendem Wind oder sonstigen günstigen äußeren Bedingungen zu den optimalen Parametern des Schleuderstreuers zurückgekehrt werden, sodass wieder mit einer möglichst dreiecksförmigen Verteilercharakteristik gearbeitet wird.

Die vorliegende Erfindung stellt zudem ein Verfahren zur Steuerung eines Schleudersteuers bereit, bei welchem im Normalbetrieb bei Erreichen des Grenzwertes für die Drehzahl zumindest einer Schleuderscheibe die Normdrehzahl auf einen von der optimalen Drehzahl abweichenden Wert reduziert und zur Aufrechterhaltung der gewünschten Arbeitsbreite der Sollwert für den Abwurfwinkel entsprechend angepasst wird. Auf diese Weise wird stets eine symmetrische Verteilercharakteristik aufrechterhalten, sodass bei der Bearbeitung benachbarter Fahrspuren eine Gleichverteilung des Düngers auf der landwirtschaftlichen Fläche durch die überlappende Bearbeitung gewahrt bleibt.

Weitere vorteilhafte Ausgestaltungen der Erfindung ergeben sich aus den weiteren Unteransprüchen und den Figuren sowie deren Beschreibung.

Es zeigen
- Fig. 1: einen erfindungsgemäßen Schleuderstreuer,
- Fig. 2: die Bearbeitung einer landwirtschaftlichen Fläche ohne Windeinfluss in schematischer Darstellung,
- Fig. 3: die Bearbeitung einer landwirtschaftlichen Fläche in angepasster Weise bei Windeinfluss,
- Fig. 4: den zeitlichen Ablauf der Regelung von Drehzahl und Aufgabepunkt bei Windeinfluss in Diagrammform,
- Fig. 5: ein Diagramm zur Veranschaulichung der Überlappung bei Anschlussfahrweise bei der Bearbeitung mit einem Schleuderstreuer und
- Fig. 6: ein Diagramm zur Veranschlaulichung der Überlappung bei Anschlussfahrweise bei der angepassten Bearbeitung mit einem Schleuderstreuer.

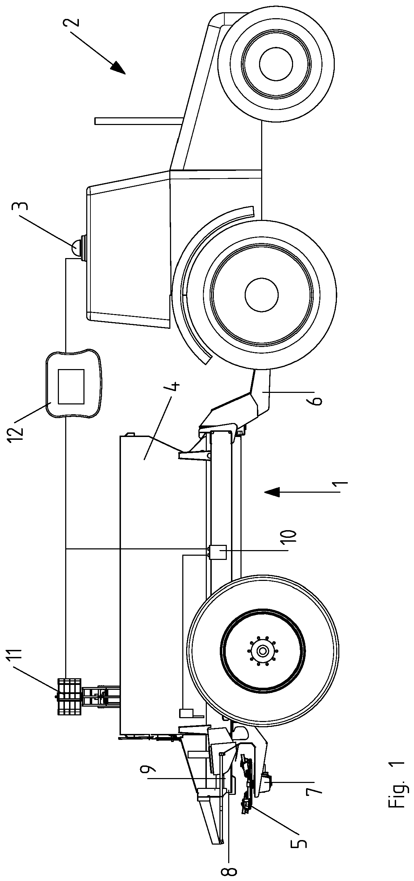

Ein erfindungsgemäßer Schleudersteuer 1 ist als gezogene landwirtschaftliche Maschine dargestellt in Fig. 1. Der Schleudersteuer 1 wird gezogen von einem Traktor 2 und ist mit diesem mittels einer Deichsel 6 verbunden. Der Traktor verfügt über eine GPS-Antenne 3. Das auszubringende landwirtschaftliche Gut befindet sich in einem Behälter 4 und wird mittels Schleuderscheiben 5 auf der landwirtschaftlichen Fläche ausgebracht. Die Parameter der Düngerverteilung, wie Drehzahl der Schleuderscheiben, Wahl des Aufgabepunktes des Düngers auf die Schleuderscheibe und die Menge an Dünger welche ausgebracht werden soll, können mittels verschiedener Aktoren in an sich bekannter Weise beeinflusst werden. So kann mittels geeigneter Regelung des Streuscheibenantriebs 7 die Drehzahl der Schleuderscheibe 5 eingestellt, mittels Ansteuerung des Aktors 8 der Aufgabepunkt des Düngers auf die Schleuderscheibe 5 geregelt und mittels Regelung des Dosierorgans 9 die Menge des auszubringenden Düngers eingestellt werden. Die Steuerung des Ausbringvorganges wird durch das Steuersystem 10 vorgenommen, welches die verschiedenen Aktoren 7,8,9 steuert. Das Steuersystem kann als Jobrechner ausgildet und an dem Schleuderstreuer 1 angeordnet sein. Alternativ kann sich das Steuersystem auch auf dem Traktor 2 befinden.

Zusätzlich verfügt der Schleuderstreuer 1 über einen Sensor zur Erfassung der Windstärke und Windrichtung 11. Dieses System kann alternativ auch an dem Traktor 2 angebracht sein. Die Messdaten des Sensors 11 und des GPS-Empfängers 3 werden durch das Steuersystem 10 verarbeitet. Die Daten des GPS-Empfängers können beispielsweise zur positionsgenauen Steuerung der Ausbringmenge verwendet werden, falls Applikationskarten in dem Steuersystem hinterlegt sind. Auch kann in der Nähe von Feldgrenzen eine Anpassung der Verteilung notwendig sein, um beispielsweise in der Nähe von Gewässern Umweltauflagen einzuhalten. Zudem werden die Messdaten des Windsensors 11 in erfindungsgemäßer Weise und wie im folgenden noch detailliert ausgeführt werden wird durch das Steuersystem 10 verwendet, um eine symmetrische Verteilcharakteristik aufrecht zu erhalten. Zusätzlich kann das Steuersystem mit einem Terminal 12 verbunden sein, in welches Daten eingegeben werden können, wie beispielsweise Sollwerte für die Arbeitsbreite und/oder die Ausbringmenge, auch können Eingaben den Schleuderstreuer betreffend, wie der Typ der Schleuderscheibe und/oder der Streuschaufeln oder deren geometrische Parameter, mittels des Terminals vorgenommen werden. Alternativ kann der Typ der Schleuderscheibe und/oder der Streuschaufeln auch automatisch mittels eines Sensors erfasst werden. Auch können in das Terminal beispielsweise Daten des Düngers oder dessen physikalische Eigenschaften, wie Dichte, Rauhigkeit oder Daten zu den Flugeigenschaften eingegeben werden. Diese Daten können alternativ auch in dem Steuersystem 10 hinterlegt sein.

Alternativ oder zusätzlich kann der Schleuderstreuer auch mit einem System von Radarsensoren ausgestattet sein, welche die tatsächliche Verteilcharakteristik der jeweils überwachten Schleuderscheibe detektieren. Hierfür wird typischerweise ein beweglicher oder mehrere stationäre Sensoren unter- oder oberhalb des Abwurfbereiches konzentrisch um das jeweilige Streuscheibenzentrum platziert. Der abgeworfene Dünger wird nun mit Radarstrahlen beaufschlagt. Die reflektierten oder gestreuten Signale werden nun in an sich bekannter Weise, vorzugsweise dopplerfrequenzabhängig, analysiert und die entsprechenden Daten, beispielsweise der mittlere Abwurfwinkel, an das Steuersystem 10 übermittelt und dort in die Regelung der Einstellparameter miteinbezogen. Die Messdaten der Radarsensoren können alternativ auch direkt in dem Steuersystem 10 analysiert werden und von diesem für die Regelung berücksichtigt werden.

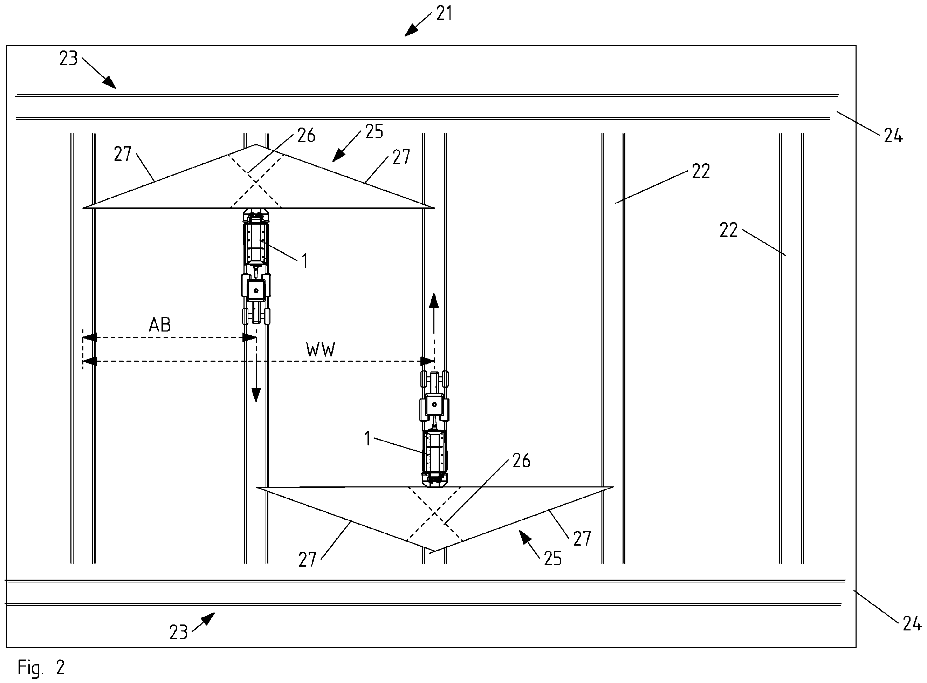

Der Verteilvorgang des Schleuderstreuers 1 ist nun in Fig. 2 schematisch anhand der Bearbeitung der landwirtschaftlichen Fläche 21 dargestellt. Die landwirtschaftliche Fläche 21 wird typischerweise in zumindest annähernd parallel verlaufende Arbeitsspuren 22 unterteilt, wobei die Stirmseiten des Feldes als Wendebereiche 23 dienen und vor oder nach der Bearbeitung der übrigen Arbeitsspuren 22 durch Abfahren der senkrecht verlaufenden Vorgewendefahrspuren 24 bearbeitet werden. Das Feld wird also vorzugsweise beim Hin- und Herfahren entlang der Fahrspuren 22 in an sich bekannter Weise mit Dünger bestreut. Das Wenden zwischen den jeweiligen Bearbeitungsvorgängen entlang der Fahrspuren 22 findet im Bereich der Vorgewende 23 statt.

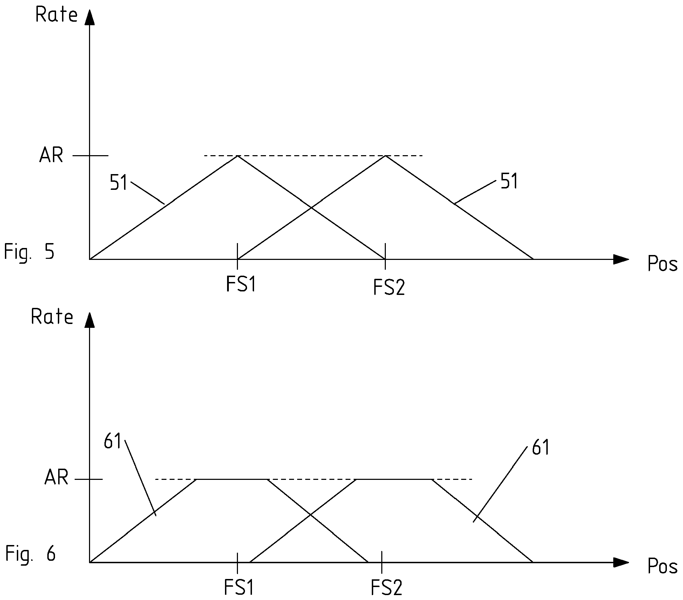

Beispielhaft dargestellt ist in Fig. 2 ein Düngerstreuer 1 als gezogener Streuer in unterschiedlichen Phasen der Bearbeitung in benachbarten Fahrspuren 22 und entgegengesetzter Fahrtrichtung, wobei die Fahrtrichtung jeweils als Pfeil angegeben ist. Hinter dem Düngerstreuer ist zudem jeweils die Verteilcharakteristik 25 dargestellt. Hierbei ist zu betonen, dass es sich dabei nicht um die zweidimensionale Ausdehnung des Streufächers handelt, welche typischerweise eine Nierenform aufweist. Statt dessen ist senkrecht zur Fahrtrichtung die jeweils bei der Überfahrt auf einen Ort aufgebrachte, kummulierte Menge Dünger dargestellt, wie weiter unten noch anhand der Figuren 5 und 6 erläutert werden wird. Die aufgebrachte Menge ist in der Fahrspurmitte am größten und fällt nach links und rechts ab, wobei die Wurfweite typischerweise bis zur Mitte der benachbarten Fahrspur reicht. Eine Überlappung der Streubereiche der beiden Schleuderscheiben findet sich insbesondere mittig hinter dem Schleuderstreuer und ist mittels der gestrichelten Linien 26 dargestellt. Hierbei wird mit Wurfweite WW typischerweise die Breite des Bereiches bezeichnet, welcher hinter der Maschine bestreut wird, also der Abstand der Mitten der jeweils benachbarten Fahrspuren. Die Arbeitsbreite AB bezeichnet demgegenüber den Abstand der tatsächlich befahrenen Fahrspuren. Der Grund, dass die Arbeitsbreite der halben Wurfweite entspricht ist dadurch begründet, dass durch Überlappen der Streubereiche benachbarter Fahrspuren eine konstante Ausbringrate erreicht wird.

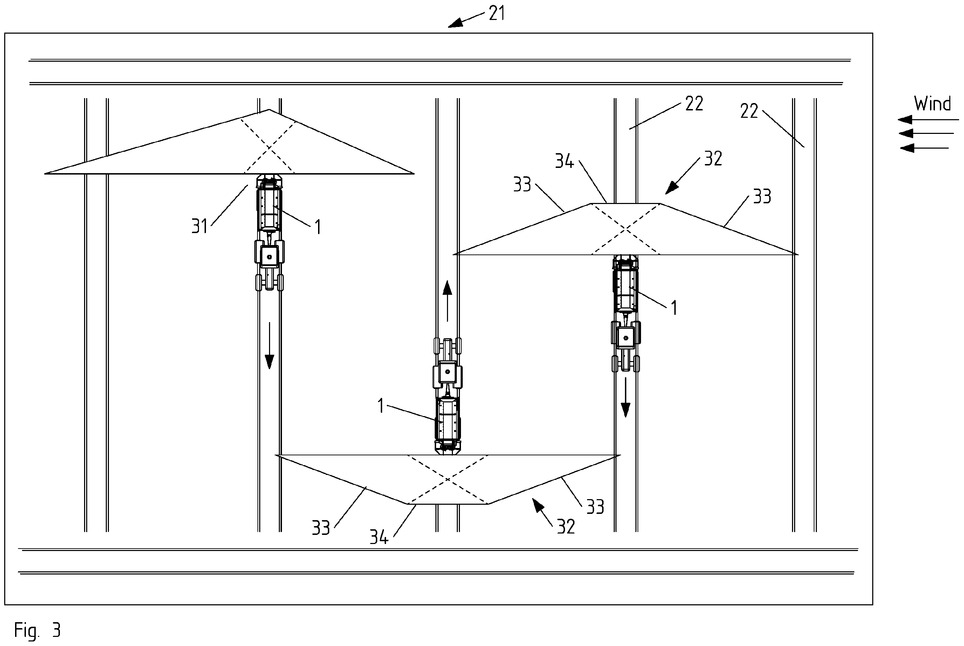

Durch die reihenweise Überlappung der Streubereiche bei ideal eingestelltem Schleuderstreuer ergibt sich also durch Aufsummieren der bei der Bearbeitung benachbarter Fahrspuren jeweils an einem Ort ausgebrachten Mengen eine konstante Ausbringrate. Die Verteilcharakteristik sollte hierbei idealerweise dreiecksförmig sein, da sich so die geringste Steigung der Dreiecksseiten 27 ergibt. Bei eher trapezförmigem Verlauf der Verteilcharakteristik würde mit breiterer Grundseite die Steigung der Seiten 27 immer größer, wie weiter unten anhand der Fig. 3 ausgeführt wird. Dies führt zu dem unerwünschten Effekt, dass bei geringen Abweichungen von der vorgegebenen Fahrspur 22 lokale Änderungen der Ausbringrate verstärkt würden. Je dreiecksförmiger also der dargestellte Verlauf der Verteilcharakteristik ist, je unempfindlicher ist die tatsächliche Ausbringrate gegenüber kleineren Fahrfehlern und Abweichungen von der vorausbrechneten Fahrspur.

Der Einfluss des Windes und die entsprechend bei der Regelung der Verteilcharakterstik vorzunehmenden Schritte sind in Fig. 3 dargestellt. Wiederum ist die Bearbeitung einer landwirtschaftlichen Fläche dargestellt. Während des Befahrens benachbarter Fahrspuren wird auch hier Dünger auf der landwirschaftlichen Fläche mittels des Düngerstreuers 1 ausgebracht. Aufkommender Windeinfluss sorgt beispielsweise dafür, dass die Verteilcharakteristik des Düngerstreuers an Position 31 sich verändert. Der Dünger erfährt durch den Wind eine unerwünschte Flugbahn, so dass der Dünger auf der einen Seite über die benachbarte Fahrspur hinausfliegt, während auf der anderen Seite die benachbarte Fahrspur nicht erreicht wird. Diese unerwünschte Veränderung der Verteilcharakteristik kann mittels der Messdaten eines Windsensors 11 berechnet oder auch mit Radarsensorsystemen direkt erfasst werden. Entsprechend kommt es zu einer Nachregelung der Einstellparameter des Düngerstreuers. Die Drehzahl der Schleuderscheibe wird durch das Steuersystem auf der einen Seite erhöht, um die Arbeitsbreite zu vergrößern und auf der anderen Seite entsprechend des Windeinflusses verringert. Erreicht die Drehzahl nun den vorgegebenen Grenzwert, so wird zur weiteren Anpassung der Arbeitsbreite der Aufgabepunkt derart verdreht, dass der Dünger weiter nach Außen geworfen wird, bis die gewünschte Arbeitsbreite erreicht wird. Der Aufgabepunkt der anderen Schleuderscheibe muss nun ebenfalls verändert werden, um ein symmetrisches Streubild zu erhalten. Hierfür muss ggf. die Drehzahl noch weiter reduziert werden, als das für diese Schleuderscheibe für die Wiederherstellung der urspürnglichen Arbeitsbreite notwendig gewesen wäre. Die beidseitige Veränderung der Aufgabepunkte führt nun zu einer eher trapezförmigen Verteilcharakteristik 32, wobei die gestrichelten Linien wiederum die Streubereiche der einzelnen Schleuderscheiben hinter dem Schleuderstreuer andeuten. Die gesamte Verteilcharakteristik ergibt sich dann durch Summation der Streumengen der beiden Schleuderscheiben an dem jeweiligen Ort als durchgezogene Linie.

Die gewünschte Ausbringrate wird auch hier durch überlappende Bearbeitung durch den Schleuderstreuer 1 bei der Fahrt auf benachbarten Fahrspuren erreicht, wobei die erreichte Ausbringrate aufgrund der bei der trapezförmigen Ausformung der Verteilcharakteristik steileren Schenkel 33 anfälliger für Abweichungen von der beabsichtigen Fahrtroute und Fahrfehler ist. Hierbei gilt, je breiter die Grundseite 34 des Trapezes im Verhältnis zur Arbeitsbreite ist, je anfälliger reagiert die tatsächlicher Ausbringrate auf Fahrfehler.

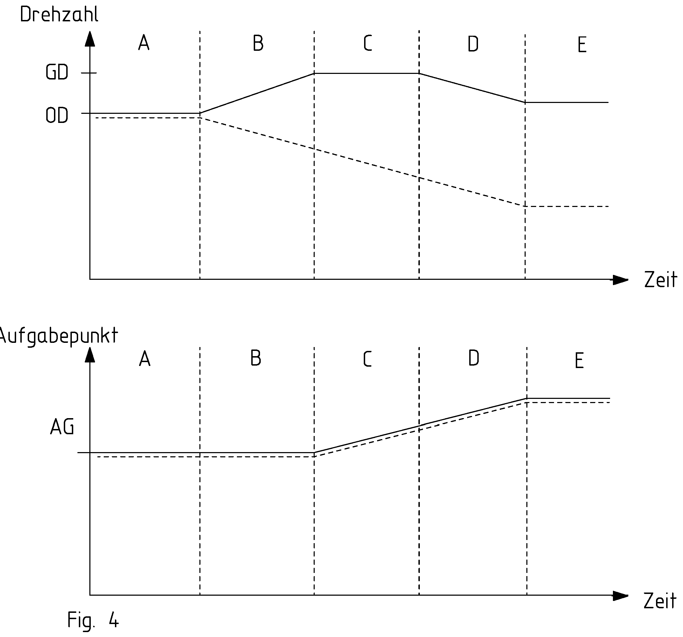

Die Regelung der Einstellparameter durch das Steuersystem kann nun beispielsweise ablaufen, wie in Fig. 4 schematisch dargestellt. Es sind zwei Diagramme dargstellt in welchen jeweils die Drehzahl der Schleuderscheiben und der Aufgabepunkt gegen die Zeit aufgetragen ist. Der Verlauf von Drehzahl und Aufgabepunkt für die erste Schleuderscheibe ist hierbei durch eine durchgezogene Linie, der für die zweite Schleuderscheibe durch eine gestrichelte Linie dargestellt. Zudem werden vier verschiedene Zeitfenster A - D unterschieden, wobei in den Zeitfenstern B - D der Windeinfluss dazu führt, dass für die erste Schleuderscheibe die angestrebte Arbeitsbreite mit den in A gewählten Betriebsparametern für Drehzahl und Aufgabepunkt nicht mehr erreicht wird, während für die zweite Schleuderscheibe eine zu große Arbeitsbreite vorliegt. Bei der Drehzahl werden ein Grenzwert für die Drehzahl GD und eine optimale Drehzahl OD angegeben. Für den Aufgabepunkt ist ein Anfangswert für den Aufgabepunkt AG definiert. Dieser Aufgabepunkt zeichnet sich dadurch aus, dass ohne Windeinfluss bei der optimalen Drehzahl, der gewählten Sollarbeitsbreite und den vorliegenden Düngereigenschaften die gewünschte dreiecksförmige Verteilcharakteristik vorliegt.

Im Bereich A wirkt nun kein Wind auf die Flugbahn des Düngers und es wird angenommen, dass auch sonst keine äußeren Einflüsse auf den Dünger wirken, wie beispielsweise Geländeneigung oder ähnliches. Eine Neigung des Geländes könnte ebenfalls zu einer asymmetrischen Verteilung führen und den entsprechenden Auswirkungen auf die Verteilcharakteristik könnte analog in erfindungsgemäßer Weise durch das Steuersystem begegnet werden. Die Schleuderscheiben werden in diesem Zustand beide mit der optimalen Drehzahl OD betrieben. Der leichte Versatz der Kurven dient hier nur der besseren Ablesbarkeit. Analog ist der Aufgabepunkt bei beiden Schleuderscheiben gleich gewählt, wobei zu beachten ist, dass die Schleuderscheiben in entgegengesetzter Richtung gedreht werden, so dass sich der gleiche Aufgabepunkt hier auf eine Spiegelung an der parallel zur Fahrtrichtung ausgerichteten Symmetrieachse des Schleduerstreuers bezieht.

Beim Übergang von Bereich A zu B tritt nun ein gleichbleibender Windeinfluss auf, der beispielsweise mittels eines Anemometers bestimmt werden kann. Dieser führt zu einer Asymmetrie in der Verteilcharakteristik, wie beispielsweise in Position 31 in Fig. 2 dargestellt. Das Steuersystem erhöht nun aufgrund der Messdaten des Anemometers und hinterlegter Rechenvorschriften die Drehzahl der ersten Schleuderscheibe und reduziert die Drehzahl der zweiten Schleuderscheibe, um weiter eine symmetrische Verteilcharakteristik zu erhalten. Am Ende des Zeitfensters B erreicht die Drehzahl für die erste Schleuderscheibe den Grenzwert für die Drehzahl und kann somit nicht weiter erhöht werden. In erfindungsgemäßer Weise wird nun in Zeitfenster C der Aufgabepunkt derart relativ zum Schleuderscheibenzentrum verdreht, dass die angestrebte Arbeitsbreite erreicht wird. In Zeitfenster C wird die Drehzahl der ersten Schleuderscheibe nicht weiter erhöht, weil der Grenzwert der Drehzahl erreicht ist. Zur Aufrechterhaltung der gewünschten Arbeitsbreite muss somit der Aufgabepunkt verdreht werden. Am Ende des Zeitfensters C wird nun beispielsweise die gewünschte Arbeitsbreite wieder erreicht.

Verbleibt die Drehzahl über einen festgelegten Zeitraum, beispielsweise die Länge des Zeitfensters C bei, in der Nähe oder über der Grenzdrehzahl, so kann vorgesehen sein, dass die Drehzahl der Schleuderscheibe in Zeitfenster D reduziert wird, um für kurzfristige Anpassungen, beispielsweise wegen sich ändernder Windverhältnisse, noch etwas Spielraum nach oben zu haben. Entsprechend muss der Aufgabepunkt zusätzlich verdreht werden. Diese Änderungen finden vorzugsweise langsam statt, beispielsweise mit einer Drehzahländerung von weniger als 1/min * 1/s, damit trotz Änderung der Verteilcharakteristik bei benachbarten Fahrspuren durch Überlappung weiterhin eine annähernd konstante Ausbringrate erreicht wird. Die Anpassung von Drehzahl und Aufgabepunkt in Zeitfenster D findet hierbei zeitgleich statt. Die Anpassung von Drehzahl und Ausbringrate kann linear oder nichtlinear erfolgen und ist durch die in dem Steuersystem hinterlegten Rechenvorschriften bestimmt.

Damit weiterhin die Verteilcharakteristik symmetrisch bezogen auf die zur Fahrtrichtung parallele Symmetrieachse des Schleuderstreuers ist, muss nun in Zeitfenster C und D ebenfalls in erfindungsgemäßer Weise der Aufgabepunkt der zweiten Schleuderscheibe analog verdreht werden. Da sich die Schleuderscheiben in entgegengesetzter Richtung drehen bedeutet dies, dass der Aufgabepunkt der zweiten Schleuderscheibe entgegen dem Uhrzeigesinn verdreht wird, falls der Aufgabepunkte der ersten Schleuderscheibe im Uhrzeigersinn verdreht wird. Die in Fig. 4 dargestellten Änderungen der Aufgabepunkte der beiden Schleuderscheiben sind also jeweils unter Berücksichtigung der jeweiligen Drehrichtungen zu interpretieren. Unter Umständen muss nun die Drehzahl der zweiten Schleuderscheibe noch weiter, wie in Fig. 4 dargestellt reduziert werden, damit durch die zusätzliche Verdrehung des Aufgabepunktes die Arbeitsbreite nicht überschritten wird. In Zeitabschnitt E ist die Regelung abgeschlossen. Die Aufgabepunkte der beiden Schleuderscheiben und die Drehzahlen werden auf Grund hinterlegter Rechenvorschriften derart eingestellt, dass eine symmetrische Verteilcharakteristik vorliegt. Hierbei kann zur Erlangung oder Aufrechterhaltung einer symmetrischen Verteilcharakteristik die Änderung der Drehzahl und die Verdrehung des Aufgabepunktes der beiden Streuscheiben in gleicher Weise/ in gleichem Maße bzw. gespiegelt erfolgen, in der Regel wird jedoch beispielsweise wegen des Geschwindigkeitsabhängigen Luftwiderstandes, die Drehzahl der einen Schleuderscheibe stärker erhöht, als die der anderen Schleuderscheibe reduziert. Auch die Verdrehung der Aufgabepunkte muss nicht spiegelgleich sein. Vielmehr kommt es nur darauf an, dass die Verteilcharakteristik die gewünschte Symmetrie aufweist. Typischerweise ist diese nun trapezförmiger ausgeformt, als die ursprünglich eher dreiecksförmige Verteilcharakteristik. Entsprechend wird die Regelung bei abnehmendem Wind die Aufgabepunkte in entgegengesetzter Richtung verändern, um wieder eine dreiecksförmigere Verteilcharakteristik einzustellen.

Die Überlappung der Streufächer beim Bearbeiten von parallelen Fahrspuren FS1 und FS2 ist nun in Fig. 5 und 6 gezeigt, wobei in Fig. 5 die Überlappung einer dreiecksförmigen Verteilcharakteristik 51 und in Fig. 6 die Überlappung mit eher trapezförmiger Verteilcharakteristik 61 jeweils in Abhängigkeit der Position POS quer zu den Fahrspuren dargestellt ist. Es soll jeweils die Ausbringrate AR erreicht werden, durch überlappende Bearbeitung des Zwischenraumes zwischen den Fahrspuren FS1 und FS2. Hier nicht dargestellte weitere Fahrspuren, welche links neben der Fahrspur FS1 und rechts neben der Fahrspur FS2 angeordnet sind, werden in analoger Weise bearbeitet. Die trapezförmige Ausformung der Verteilcharakteristik 61 kann beispielsweise dazu führen, dass die tatsächliche Arbeitsbreite etwas reduziert werden muss, damit bei der überlappenden Bearbeitung überall die gleiche Ausbringrate erreicht wird. Die Verteilcharakteristik reicht also in diesem Fall nicht ganz bis zur Mitte der benachbarten Fahrspur. Wie bereits erwähnt ist die Verteilcharakteristik 61 gegenüber 51 benachteiligt, da die Schenkel des Trapezes steiler abfallen als die entsprechenden Dreiecksseiten einer dreiecksförmigen Verteilcharakteristik. Bei unbeabsichtigten Abweichungen von der geplanten Fahrspur FS1 oder FS2 sind die Änderungen der Ausbringrate größer, je größer die Steigung der Schenkel ist. Eine dreiecksförmige Verteilcharakteristik ist also in der Regel zu bevorzugen.

## Patentansprüche

1. Steuersystem für einen Schleuderstreuer (1) zur Ausbringung von landwirtschaftlichem Gut, vorzugsweise Dünger, wobei der Schleuderstreuer (1) über einen Behälter (4) zur Aufbewahrung des Gutes verfügt, wobei das Gut mittels zwei Schleuderscheiben (5) in Breitverteilung ausgebracht wird, wobei die Drehzahl der Schleuderscheiben (5) in regelbarer Weise anpassbar ist, wobei die auszubringende Menge des Guts mittels jeweils eines Dosierorgans (9), vorzugsweise eines Dosierschiebers, den Schleuderscheiben zuführbar ist, wobei der Schleuderstreuer über zumindest einen Sensor (11) zur Bestimmung von Messwerten verfügt, aus welchen direkt oder indirekt ein Maß für die Symmetrie der Verteilcharakteristik (25,32) bezogen auf die Fahrtrichtung des Schleuderstreuers ableitbar ist, wobei eine maximale Drehzahl (GD) als Grenzwert für die Drehzahl der Schleuderscheiben und eine gewünschte Arbeitsbreite (AB) als Sollwert in das Steuersystem (10) eingegeben und/oder an dieses übergeben wird und/oder in diesem hinterlegt ist, wobei in einem Normalbetrieb die regelbaren Parameter durch das Steuersystem (10) derart eingestellt werden, dass eine möglichst symmetrische Verteilcharakteristik bezogen auf die Fahrtrichtung des Schleuderstreuers erreicht wird, wobei ein von der gewünschten Arbeitsbreite (AB) und der aktuellen Drehzahl abhängiger Sollwert für den Abwurfwinkel in dem Steuersystem hinterlegt ist oder durch dieses berechnet wird,
**dadurch gekennzeichnet, dass**
im Normalbetrieb bei Erreichen des Grenzwertes (GD) für die Drehzahl zumindest einer Schleuderscheibe zur Aufrechterhaltung der gewünschten Arbeitsbreite (AB) der Sollwert für den Abwurfwinkel dieser Schleuderscheibe durch das Steuersystem (10) entsprechend angepasst wird und zur Aufrechterhaltung einer symmerischen Verteilcharakteristik die Drehzahl der zweiten Schleuderscheibe und der Sollwert für den Abwurfwinkel der zweiten Schleuderscheibe durch das Steuersystem (10) entsprechend angepasst wird.

2. Steuersystem nach Anspruch 1, **dadurch gekennzeichnet, dass** zur Aufrechterhaltung einer symmetrischen Verteilcharakteristik durch jeweilige Verlagerung des Sollabwurfwinkels nach außen durch das Steuersystem (10) von der gewünschten, zumindest annähernd dreiecksförmigen Verteilcharakteristik hin zu einer trapezförmigeren Verteilcharakteristik gewechselt wird.

3. Steuersystem nach Anspruch 1 oder 2, **dadurch gekennzeichnet, dass** in dem Steuersystem eine Normdrehzahl (OD), als optimale Drehzahl, für beide Schleuderscheiben (5) hinterlegt oder in dieses eingebbar ist und bei Erreichen des Grenzwertes für die Drehzahl diese Normdrehzahl entsprechend der Änderung des Sollwertes für den Abwurfwinkel reduziert wird.

4. Steuersystem nach zumindest einem der Ansprüch 1 - 3, **dadurch gekennzeichnet, dass** zur verbesserten Einstellbarkeit eines symmetrischen Streubildes zusätzlich der Typ der Schleuderscheibe (5) und/oder geometrische Parameter der Schleuderscheiben und/oder deren Streuschaufeln in dem Steuersystem (10) hinterlegt und/oder an dieses übergebbar sind.

5. Steuersystem nach zumindest einem der Ansprüch 1 - 4, **dadurch gekennzeichnet, dass** zur verbesserten Einstellbarkeit zusätzlich ein Sollwert und/oder Referenzwert für die Wurfweite (WW), vorzugsweise in Abhängigkeit einer Streuscheibendrehzahl und/oder eines bekannten Streuscheibentyps, in dem Steuersystem hinterlegt und/oder in dieses eingebbar ist.

6. Steuersystem nach zumindest einem der Ansprüche 1 - 5, **dadurch gekennzeichnet, dass** ebenfalls ein Grenzwert für den Sollwert des Abwurfwinkels hinterlegt ist und ein Warnsignal ausgegeben wird und/oder der Streuvorgang beendet wird, wenn für zumindest eine Schleuderscheibe (5) der Grenzwert für den Abwurfwinkel und/oder der Drehzahl in einem festgelegten Zeitraum für einen festgelegten Anteil des Zeitraumes erreicht oder überschritten wird.

7. Steuersystem nach zumindest einem der Ansprüch 1 - 6, **dadurch gekennzeichnet, dass** der Sensor (11) zur direkten oder indirekten Bestimmung von Messwerten, aus welchen ein Maß für die Symmetrie der Verteilcharakteristik bezogen auf die Fahrtrichtung des Schleuderstreuers ableitbar ist, als Sensor zur Bestimmung der Windstärke und/oder Windrichtung ausgebildet ist.

8. Steuersystem nach zumindest einem der Ansprüch 1 - 7, **dadurch gekennzeichnet, dass** der Sensor zur direkten oder indirekten Bestimmung von Messwerten, aus welchen ein Maß für die Symmetrie der Verteilcharakteristik bezogen auf die Fahrtrichtung des Schleuderstreuers ableitbar ist, als zumindest ein Sensor, vorzugsweise Radarsensor, oder entsprechendes System von Sensoren zur berührungslosen Charakterisierung mindestens eines Parameters der Verteilcharakteristik, wie vorzugsweise Wurfrichtung und/oder Wurfweite, des Schleuderstreuers ausgebildet ist.

9. Steuersystem nach zumindest einem der Ansprüch 1 - 8, **dadurch gekennzeichnet, dass** der Schleuderstreuer über ein System zur Anpassung des Aufgabepunktes des auszubringenden Guts auf die jeweilige Schleuderscheibe verfügt und der Aufgabepunkt durch das Steuersystem (10)aus dem jeweiligen Sollwert für den Abwurfwinkel mittels hinterlegter Rechenvorschriften bestimmt und/oder angepasst wird.

10. Steuersystem nach zumindest einem der Ansprüche 1 - 9, **dadurch gekennzeichnet, dass** die Anpassung der Normdrehzahl mit einer vorgegebenen Rate, vorzugsweise weniger als 1 *1/min *1/s, durch das Steuersystem erfolgt.

11. Steuersystem nach zumindest einem der Ansprüche 1 - 10, **dadurch gekennzeichnet, dass** die Reduktion der Normdrehzahl in Abhängigkeit der Messwerte des Sensors (11), insbesondere der Windstärke und/oder Richtung, durch das Steuersystem (10) durchgeführt wird.

12. Steuersystem nach zumindest einem der Ansprüche 1 - 11, **dadurch gekennzeichnet, dass** die Normdrehzahl durch das Steuersystem wieder auf den optimalen Wert erhöht wird, wenn die Windstärke und/oder die Schleuderscheibendrehzahl für einen festgelegten Zeitraum unterhalb eines Grenzwertes verbleibt.

13. Verfahren zur Steuerung eines Schleuderstreuers (1) zur Ausbringung von landwirtschaftlichem Gut, vorzugsweise Dünger, wobei das Gut mittels zwei Schleuderscheiben (5) in Breitverteilung ausgebracht wird, wobei die Drehzahl der Schleuderscheiben (5) in regelbarer Weise anpassbar ist, wobei die auszubringende Menge des Guts mittels jeweils eines Dosierorgans (9), vorzugsweise eines Dosierschiebers, den Schleuderscheiben zuführbar ist, wobei der Schleuderstreuer über zumindest einen Sensor (11) zur Bestimmung von Messwerten verfügt, aus welchen direkt oder indirekt ein Maß für die Symmetrie der Verteilcharakteristik (25, 32) bezogen auf die Fahrtrichtung des Schleuderstreuers (1) ableitbar ist, wobei eine maximale Drehzahl als Grenzwert für die Drehzahl (GD) der Schleuderscheiben (5) und eine gewünschte Arbeitsbreite (AB) als Sollwert vorgegeben ist, wobei in einem Normalbetrieb die regelbaren Parameter durch derart bestimmt werden, dass eine möglichst symmetrische Verteilcharakteristik bezogen auf die Fahrtrichtung des Schleuderstreuers erreicht wird, wobei ein von der gewünschten Arbeitsbreite (AB) und der aktuellen Drehzahl abhängiger Sollwert für den Abwurfwinkel bestimmbar ist,
**dadurch gekennzeichnet, dass**
im Normalbetrieb bei Erreichen des Grenzwertes (GD) für die Drehzahl zumindest einer Schleuderscheibe zur Aufrechterhaltung der gewünschten Arbeitsbreite (AB) der Sollwert für den Abwurfwinkel dieser Schleuderscheibe entsprechend angepasst wird und zur Aufrechterhaltung einer symmerischen Verteilcharakteristik die Drehzahl der zweiten Schleuderscheibe und der Sollwert für den Abwurfwinkel der zweiten Schleuderscheibe entsprechend angepasst wird.

14. Verfahren nach Anspruch 13, **dadurch gekennzeichnet, dass** zur Aufrechterhaltung einer symmetrischen Verteilcharakteristik durch jeweilige Verlagerung des Sollabwurfwinkels nach außen von der gewünschten, zumindest annähernd dreiecksförmigen Verteilcharakteristik hin zu einer trapezförmigeren Verteilcharakteristik gewechselt wird.

15. Verfahren nach Anspruch 13 oder 14, **dadurch gekennzeichnet, dass** eine Normdrehzahl (OD), als optimale Drehzahl, für beide Schleuderscheiben definiert ist und bei Erreichen des Grenzwertes für die Drehzahl (GD) diese Normdrehzahl entsprechend der Änderung des Sollwertes für den Abwurfwinkel reduziert wird.

16. Verfahren nach zumindest einem der Ansprüch 13 - 15, **dadurch gekennzeichnet, dass** zur verbesserten Einstellbarkeit eines symmetrischen Streubildes zusätzlich der Typ der Schleuderscheibe (5) und/oder geometrische Parameter der Schleuderscheiben und/oder deren Streuschaufeln berücksichtigt werden.

17. Verfahren nach zumindest einem der Ansprüch 13 - 16, **dadurch gekennzeichnet, dass** zur verbesserten Einstellbarkeit zusätzlich ein Sollwert und/oder Referenzwert für die Wurfweite, vorzugsweise in Abhängigkeit einer Streuscheibendrehzahl und/oder eines bekannten Streuscheibentyps, verücksichtigt wird.

18. Verfahren nach zumindest einem der Ansprüch 13 - 17, **dadurch gekennzeichnet, dass** ebenfalls ein Grenzwert für den Sollwert des Abwurfwinkels hinterlegt ist und ein Warnsignal ausgegeben wird und/oder der Streuvorgang beendet wird, wenn für zumindest eine Schleuderscheibe (5) der Grenzwert für den Abwurfwinkel und/oder der Drehzahl in einem festgelegten Zeitraum für einen festgelegten Anteil des Zeitraumes erreicht oder überschritten wird.

19. Verfahren nach zumindest einem der Ansprüch 13 - 18, **dadurch gekennzeichnet, dass** der Sensor (11) zur direkten oder indirekten Bestimmung von Messwerten, aus welchen ein Maß für die Symmetrie der Verteilcharakteristik bezogen auf die Fahrtrichtung des Schleuderstreuers (1) ableitbar ist, als Sensor zur Bestimmung der Windstärke und/oder Windrichtung ausgebildet ist.

20. Verfahren nach zumindest einem der Ansprüch 13 - 19, **dadurch gekennzeichnet, dass** der Sensor zur direkten oder indirekten Bestimmung von Messwerten, aus welchen ein Maß für die Symmetrie der Verteilcharakteristik bezogen auf die Fahrtrichtung des Schleuderstreuers ableitbar ist, als zumindest ein Sensor oder entsprechendes System von Sensoren zur berührungslosen Charakterisierung mindestens eines Parameters der Verteilcharakteristik, wie vorzugsweise Wurfrichtung und/oder Wurfweite, des Schleuderstreuers ausgebildet ist.

21. Verfahren nach zumindest einem der Ansprüch 13 - 20, **dadurch gekennzeichnet, dass** der Schleuderstreuer (1) über ein System zur Anpassung des Aufgabepunktes des auszubringenden Guts auf die jeweilige Schleuderscheibe verfügt und der Aufgabepunkt aus dem jeweiligen Sollwert für den Abwurfwinkel bestimmt und/oder angepasst wird.

22. Verfahren nach zumindest einem der Ansprüche 13 - 21, **dadurch gekennzeichnet, dass** die Anpassung der Normdrehzahl mit einer vorgegebenen Rate, vorzugsweise weniger als 1 *1/min *1/s, erfolgt.

23. Verfahren nach zumindest einem der Ansprüche 13 - 22, **dadurch gekennzeichnet, dass** die Reduktion der Normdrehzahl in Abhängigkeit der Messwerte des Sensors (11), insbesondere der Windstärke und/oder Richtung, durchgeführt wird.

24. Verfahren nach zumindest einem der Ansprüche 13 - 23, **dadurch gekennzeichnet, dass** die Normdrehzahl wieder auf den optimalen Wert erhöht wird, wenn die Windstärke und/oder die Schleuderscheibendrehzahl für einen festgelegten Zeitraum unterhalb eines Grenzwertes verbleibt.

## Claims

1. Control system for a centrifugal spreader (1) for applying agricultural material, preferably fertilizer, wherein the centrifugal spreader (1) has a container (4) for storing the material, wherein the material is applied in a wide spread by means of two centrifugal discs (5), wherein the speed of the centrifugal discs (5) can be adapted in a controllable manner, wherein the amount of material to be applied can be supplied to the centrifugal discs by means of a respective metering element (9), preferably a metering slider, wherein the centrifugal spreader has at least one sensor (11) for determining measured values which can be directly or indirectly used to derive a measure of the symmetry of the distribution characteristic (25, 32) based on the direction of travel of the centrifugal spreader, wherein a maximum speed (GD) as a limit value for the speed of the centrifugal discs and a desired working width (AB) as a desired value are input to the control system (10) and/or transferred to the latter and/or stored therein, wherein the controllable parameters are adjusted by the control system (10) during normal operation in such a manner that a distribution characteristic which is as symmetrical as possible based on the direction of travel of the centrifugal spreader is achieved, wherein a desired value for the discharge angle, which is dependent on the desired working width (AB) and the current speed, is stored in the control system or is calculated by the latter,
**characterized in that**
if the limit value (GD) for the speed of at least one centrifugal disc is reached during normal operation, the desired value for the discharge angle of this centrifugal disc is accordingly adapted by the control system (10) in order to maintain the desired working width (AB) and the speed of the second centrifugal disc and the desired value for the discharge angle of the second centrifugal disc are accordingly adapted by the control system (10) in order to maintain a symmetrical distribution characteristic.

2. Control system according to Claim 1, **characterized in that**, in order to maintain a symmetrical distribution characteristic by respectively shifting the desired discharge angle to the outside, the control system (10) changes from the desired, at least approximately triangular distribution characteristic to a more trapezoidal distribution characteristic.

3. Control system according to Claim 1 or 2, **characterized in that** a standard speed (OD), as an optimum speed, for both centrifugal discs (5) is stored in the control system or can be input to the latter, and this standard speed is reduced according to the change in the desired value for the discharge angle if the limit value for the speed is reached.

4. Control system according to at least one of Claims 1-3, **characterized in that**, for the improved adjustability of a symmetrical spread pattern, the type of centrifugal disc (5) and/or geometrical parameters of the centrifugal discs and/or of their spreading vanes is/are additionally stored in the control system (10) and/or can be transferred to the latter.

5. Control system according to at least one of Claims 1-4, **characterized in that**, for the improved adjustability, additionally a desired value and/or a reference value for the throwing distance (WW) is/are stored in the control system and/or can be input to the latter, preferably on the basis of a spreading disc speed and/or a known spreading disc type.

6. Control system according to at least one of Claims 1-5, **characterized in that** a limit value for the desired value of the discharge angle is likewise stored, and a warning signal is output and/or the spreading operation is terminated if the limit value for the discharge angle and/or the speed is reached or exceeded for at least one centrifugal disc (5) in a stipulated period for a stipulated portion of the period.

7. Control system according to at least one of Claims 1-6, **characterized in that** the sensor (11) for directly or indirectly determining measured values which can be used to derive a measure of the symmetry of the distribution characteristic based on the direction of travel of the centrifugal spreader is in the form of a sensor for determining the wind strength and/or wind direction.

8. Control system according to at least one of Claims 1-7, **characterized in that** the sensor for directly or indirectly determining measured values which can be used to derive a measure of the symmetry of the distribution characteristic based on the direction of travel of the centrifugal spreader is in the form of at least one sensor, preferably a radar sensor, or a corresponding system of sensors for contactlessly characterizing at least one parameter of the distribution characteristic, such as preferably the throwing direction and/or throwing distance, of the centrifugal spreader.

9. Control system according to at least one of Claims 1-8, **characterized in that** the centrifugal spreader has a system for adapting the point at which the material to be applied is delivered to the respective centrifugal disc, and the delivery point is determined and/or adapted by the control system (10) from the respective desired value for the discharge angle by means of stored calculation rules.

10. Control system according to at least one of Claims 1-9, **characterized in that** the standard speed is adapted by the control system at a predefined rate, preferably less than 1 * 1/min * 1/s.

11. Control system according to at least one of Claims 1-10, **characterized in that** the standard speed is reduced by the control system (10) on the basis of the measured values from the sensor (11), in particular the wind strength and/or direction.

12. Control system according to at least one of Claims 1-11, **characterized in that** the standard speed is increased to the optimum value again by the control system if the wind strength and/or the centrifugal disc speed remain(s) below a limit value for a stipulated period.

13. Method for controlling a centrifugal spreader (1) for applying agricultural material, preferably fertilizer, wherein the material is applied in a wide spread by means of two centrifugal discs (5), wherein the speed of the centrifugal discs (5) can be adapted in a controllable manner, wherein the amount of material to be applied can be supplied to the centrifugal discs by means of a respective metering element (9), preferably a metering slider, wherein the centrifugal spreader has at least one sensor (11) for determining measured values which can be directly or indirectly used to derive a measure of the symmetry of the distribution characteristic (25, 32) based on the direction of travel of the centrifugal spreader (1), wherein a maximum speed as a limit value for the speed (GD) of the centrifugal discs (5) and a desired working width (AB) as a desired value are predefined, wherein the controllable parameters are determined during normal operation by in such a manner that a distribution characteristic which is as symmetrical as possible based on the direction of travel of the centrifugal spreader is achieved, wherein a desired value for the discharge angle, which is dependent on the desired working width (AB) and the current speed, can be determined,
**characterized in that**
if the limit value (GD) for the speed of at least one centrifugal disc is reached during normal operation, the desired value for the discharge angle of this centrifugal disc is accordingly adapted in order to maintain the desired working width (AB) and the speed of the second centrifugal disc and the desired value for the discharge angle of the second centrifugal disc are accordingly adapted in order to maintain a symmetrical distribution characteristic.

14. Method according to Claim 13, **characterized in that**, in order to maintain a symmetrical distribution characteristic by respectively shifting the desired discharge angle to the outside, a change is made from the desired, at least approximately triangular distribution characteristic to a more trapezoidal distribution characteristic.

15. Method according to Claim 13 or 14, **characterized in that** a standard speed (OD), as an optimum speed, for both centrifugal discs is defined, and this standard speed is reduced according to the change in the desired value for the discharge angle if the limit value for the speed (GD) is reached.

16. Method according to at least one of Claims 13-15, **characterized in that**, for the improved adjustability of a symmetrical spread pattern, the type of centrifugal disc (5) and/or geometrical parameters of the centrifugal discs and/or of their spreading vanes is/are additionally taken into account.

17. Method according to at least one of Claims 13-16, **characterized in that**, for the improved adjustability, a desired value and/or a reference value for the throwing distance is/are additionally taken into account, preferably on the basis of a spreading disc speed and/or a known spreading disc type.

18. Method according to at least one of Claims 13-17, **characterized in that** a limit value for the desired value of the discharge angle is likewise stored, and a warning signal is output and/or the spreading operation is terminated if the limit value for the discharge angle and/or the speed is reached or exceeded for at least one centrifugal disc (5) in a stipulated period for a stipulated portion of the period.

19. Method according to at least one of Claims 13-18, **characterized in that** the sensor (11) for directly or indirectly determining measured values which can be used to derive a measure of the symmetry of the distribution characteristic based on the direction of travel of the centrifugal spreader (1) is in the form of a sensor for determining the wind strength and/or wind direction.

20. Method according to at least one of Claims 13-19, **characterized in that** the sensor for directly or indirectly determining measured values which can be used to derive a measure of the symmetry of the distribution characteristic based on the direction of travel of the centrifugal spreader is in the form of at least one sensor or a corresponding system of sensors for contactlessly characterizing at least one parameter of the distribution characteristic, such as preferably the throwing direction and/or throwing distance, of the centrifugal spreader.

21. Method according to at least one of Claims 13-20, **characterized in that** the centrifugal spreader (1) has a system for adapting the point at which the material to be applied is delivered to the respective centrifugal disc, and the delivery point is determined and/or adapted from the respective desired value for the discharge angle.

22. Method according to at least one of Claims 13-21, **characterized in that** the standard speed is adapted at a predefined rate, preferably less than 1 * 1/min * 1/s.

23. Method according to at least one of Claims 13-22, **characterized in that** the standard speed is reduced on the basis of the measured values from the sensor (11), in particular the wind strength and/or direction.

24. Method according to at least one of Claims 13-23, **characterized in that** the standard speed is increased to the optimum value again if the wind strength and/or the centrifugal disc speed remain(s) below a limit value for a stipulated period.

## Revendications

1. Système de commande pour une épandeuse centrifuge (1) destinée à l'épandage de produit agricole, de préférence de l'engrais, l'épandeuse centrifuge (1) disposant d'un réservoir (4) servant à conserver le produit, le produit étant épandu au moyen de deux plateaux centrifuges (5) dans une distribution en largeur, la vitesse de rotation des plateaux centrifuges (5) pouvant être adaptée de manière régulable, la quantité de produit à épandre pouvant être acheminée aux plateaux centrifuges respectivement au moyen d'un organe de dosage (9), de préférence d'un coulisseau doseur, l'épandeuse centrifuge disposant d'au moins un capteur (11) destiné à déterminer des valeurs mesurées à partir desquelles peut être dérivée, directement ou indirectement, une mesure de la symétrie de la caractéristiques de distribution (25, 32) en référence au sens de déplacement de l'épandeuse centrifuge, une vitesse de rotation (GD) maximale en tant que valeur limite pour la vitesse de rotation des plateaux centrifuges et une largeur de travail (AB) souhaitée en tant que valeur de consigne étant saisies dans le système de commande (10) et/ou étant transférées à celui-ci et/ou étant enregistrées dans celui-ci, dans un mode de fonctionnement normal, les paramètres régulable étant réglés par le système de commande (10) de telle sorte qu'une caractéristique de distribution si possible symétrique en référence au sens de déplacement de l'épandeuse centrifuge est obtenue, une valeur de consigne de l'angle d'éjection, dépendante de la largeur de travail (AB) souhaitée et de la vitesse de rotation actuelle, étant enregistrée dans le système de commande ou étant calculée par celui-ci,
**caractérisé en ce que**
en fonctionnement normal, lorsque la valeur limite (GD) de la vitesse de rotation d'au moins un plateau centrifuge est atteinte, la valeur de consigne de l'angle d'éjection de ce plateau centrifuge est adaptée en conséquence par le système de commande (10) en vue de maintenir la largeur de travail (AB) souhaitée et la vitesse de rotation du deuxième plateau centrifuge ainsi que la valeur de consigne de l'angle d'éjection du deuxième plateau centrifuge sont adaptées en conséquence par le système de commande (10) en vue de maintenir une caractéristique de distribution symétrique.

2. Système de commande selon la revendication 1, **caractérisé en ce qu'**en vue de maintenir une caractéristique de distribution symétrique par décalage respectif de l'angle d'éjection de consigne vers l'extérieur, le système de commande (10) change de la caractéristique de distribution souhaitée, approximativement triangulaire, en une caractéristique de distribution trapézoïdale.

3. Système de commande selon la revendication 1 ou 2, **caractérisé en ce qu'**une vitesse de rotation normalisée (OD), en tant que vitesse de rotation optimale, pour les deux plateaux centrifuges (5) est enregistrée dans le système de commande ou peut y être saisie, et lorsque la valeur limite pour la vitesse de rotation est atteinte, cette vitesse de rotation normalisée est réduite conformément à la modification de la valeur de consigne de l'angle d'éjection.

4. Système de commande selon au moins l'une des revendications 1 à 3, **caractérisé en ce qu'**en vue d'une meilleure aptitude au réglage d'un schéma d'épandage symétrique, le type de plateau centrifuge (5) et/ou les paramètres géométriques des plateaux centrifuges et/ou de leurs pales d'épandage sont en plus enregistrés dans le système de commande (10) et/ou peuvent lui être transmis.

5. Système de commande selon au moins l'une des revendications 1 à 4, **caractérisé en ce qu'**en vue d'une meilleure aptitude au réglage, une valeur de consigne et/ou une valeur de référence de la largeur de projection (WW), de préférence en fonction d'une vitesse de rotation de plateau centrifuge et/ou d'un type connu de plateau centrifuge, est en plus enregistrée dans le système de commande (10) et/ou pour lui être transmise.

6. Système de commande selon au moins l'une des revendications 1 à 5, **caractérisé en ce qu'**une valeur limite pour la valeur de consigne de l'angle d'éjection est également enregistrée et un signal d'alerte est délivré et/ou l'opération de commande prend fin si, pour au moins un plateau centrifuge (5), la valeur limite de l'angle d'éjection et/ou de la vitesse de rotation est atteinte ou dépassée dans une période donnée pendant une part définie de la période.

7. Système de commande selon au moins l'une des revendications 1 à 6, **caractérisé en ce que** le capteur (11) destiné à déterminer directement ou indirectement des valeurs mesurées, à partir desquelles peut être dérivée une mesure de la symétrie de la caractéristique de distribution en référence au sens de déplacement de l'épandeuse centrifuge, est réalisé sous la forme d'un capteur destiné à déterminer la vitesse du vent et/ou la direction du vent.

8. Système de commande selon au moins l'une des revendications 1 à 7, **caractérisé en ce que** le capteur destiné à déterminer directement ou indirectement des valeurs mesurées, à partir desquelles peut être dérivée une mesure de la symétrie de la caractéristique de distribution en référence au sens de déplacement de l'épandeuse centrifuge, est réalisé au moins sous la forme d'un capteur, de préférence un capteur radar, ou d'un système de capteurs correspondant servant à caractériser sans contact au moins un paramètre de la caractéristique de distribution, comme de préférence la direction de projection et/ou la largeur de projection de l'épandeuse centrifuge.

9. Système de commande selon au moins l'une des revendications 1 à 8, **caractérisé en ce que** l'épandeuse centrifuge dispose d'un système destiné à adapter le point d'application du produit à épandre en fonction du plateau centrifuge respectif et le point d'application est déterminé et/ou adapté par le système de commande (10) à partir de la valeur de consigne respective de l'angle d'éjection au moyen de règles de calcul enregistrées.

10. Système de commande selon au moins l'une des revendications 1 à 9, **caractérisé en ce que** l'adaptation de la vitesse de rotation normalisée est effectuée par le système de commande avec un taux prédéfini, de préférence inférieur à 1 * 1/min *1/s.

11. Système de commande selon au moins l'une des revendications 1 à 10, **caractérisé en ce que** la réduction de la vitesse de rotation normalisée est réalisée par le système de commande (10) en fonction des valeurs mesurées du capteur (11), notamment de la vitesse et/ou de la direction du vent.

12. Système de commande selon au moins l'une des revendications 1 à 11, **caractérisé en ce que** la vitesse de rotation normalisée est de nouveau augmentée à la valeur optimale par le système de commande lorsque la vitesse du vent et/ou la vitesse de rotation des plateaux centrifuges demeure au-dessous d'une valeur limite pendant une période définie.

13. Procédé de commande d'une épandeuse centrifuge (1) destinée à l'épandage de produit agricole, de préférence de l'engrais, le produit étant épandu au moyen de deux plateaux centrifuges (5) dans une distribution en largeur, la vitesse de rotation des plateaux centrifuges (5) pouvant être adaptée de manière régulable, la quantité de produit à épandre pouvant être acheminée aux plateaux centrifuges respectivement au moyen d'un organe de dosage (9), de préférence d'un coulisseau doseur, l'épandeuse centrifuge disposant d'au moins un capteur (11) destiné à déterminer des valeurs mesurées à partir desquelles peut être dérivée, directement ou indirectement, une mesure de la symétrie de la caractéristiques de distribution (25, 32) en référence au sens de déplacement de l'épandeuse centrifuge, une vitesse de rotation maximale en tant que valeur limite pour la vitesse de rotation (GD) des plateaux centrifuges et une largeur de travail (AB) souhaitée en tant que valeur de consigne étant prédéfinies, procédé selon lequel, dans un mode de fonctionnement normal, les paramètres régulable sont déterminés par de telle sorte qu'une caractéristique de distribution si possible symétrique en référence au sens de déplacement de l'épandeuse centrifuge est obtenue, une valeur de consigne de l'angle d'éjection, dépendante de la largeur de travail (AB) souhaitée et de la vitesse de rotation actuelle, pouvant être définie,
**caractérisé en ce que**
en fonctionnement normal, lorsque la valeur limite (GD) de la vitesse de rotation d'au moins un plateau centrifuge est atteinte, la valeur de consigne de l'angle d'éjection de ce plateau centrifuge est adaptée en conséquence en vue de maintenir la largeur de travail (AB) souhaitée et la vitesse de rotation du deuxième plateau centrifuge ainsi que la valeur de consigne de l'angle d'éjection du deuxième plateau centrifuge sont adaptées en conséquence en vue de maintenir une caractéristique de distribution symétrique.

14. Procédé selon la revendication 13, **caractérisé en ce qu'**en vue de maintenir une caractéristique de distribution symétrique par décalage respectif de l'angle d'éjection de consigne vers l'extérieur, un changement est effectué de la caractéristique de distribution souhaitée, approximativement triangulaire, en une caractéristique de distribution trapézoïdale.

15. Procédé selon la revendication 13 ou 14, **caractérisé en ce qu'**une vitesse de rotation normalisée (OD), en tant que vitesse de rotation optimale, pour les deux plateaux centrifuges est définie, et lorsque la valeur limite pour la vitesse de rotation (GD) est atteinte, cette vitesse de rotation normalisée est réduite conformément à la modification de la valeur de consigne de l'angle d'éjection

16. Procédé selon au moins l'une des revendications 13 à 15, **caractérisé en ce qu'**en vue d'une meilleure aptitude au réglage d'un schéma d'épandage symétrique, le type de plateau centrifuge (5) et/ou les paramètres géométriques des plateaux centrifuges et/ou de leurs pales d'épandage sont en plus pris en compte.

17. Procédé selon au moins l'une des revendications 13 à 16, **caractérisé en ce qu'**en vue d'une meilleure aptitude au réglage, une valeur de consigne et/ou une valeur de référence de la largeur de projection, de préférence en fonction d'une vitesse de rotation de plateau centrifuge et/ou d'un type connu de plateau centrifuge, est en plus prise en compte.

18. Procédé selon au moins l'une des revendications 13 à 17, **caractérisé en ce qu'**une valeur limite pour la valeur de consigne de l'angle d'éjection est également enregistrée et un signal d'alerte est délivré et/ou l'opération de commande prend fin si, pour au moins un plateau centrifuge (5), la valeur limite de l'angle d'éjection et/ou de la vitesse de rotation est atteinte ou dépassée dans une période donnée pendant une part définie de la période.

19. Procédé selon au moins l'une des revendications 13 à 18, **caractérisé en ce que** le capteur (11) destiné à déterminer directement ou indirectement des valeurs mesurées, à partir desquelles peut être dérivée une mesure de la symétrie de la caractéristique de distribution en référence au sens de déplacement de l'épandeuse centrifuge (1), est réalisé sous la forme d'un capteur destiné à déterminer la vitesse du vent et/ou la direction du vent.

20. Procédé selon au moins l'une des revendications 13 à 19, **caractérisé en ce que** le capteur destiné à déterminer directement ou indirectement des valeurs mesurées, à partir desquelles peut être dérivée une mesure de la symétrie de la caractéristique de distribution en référence au sens de déplacement de l'épandeuse centrifuge, est réalisé au moins sous la forme d'un capteur ou d'un système de capteurs correspondant servant à caractériser sans contact au moins un paramètre de la caractéristique de distribution, comme de préférence la direction de projection et/ou la largeur de projection de l'épandeuse centrifuge.

21. Procédé selon au moins l'une des revendications 13 à 20, **caractérisé en ce que** l'épandeuse centrifuge (1) dispose d'un système destiné à adapter le point d'application du produit à épandre en fonction du plateau centrifuge respectif et le point d'application est déterminé et/ou adapté à partir de la valeur de consigne respective de l'angle d'éjection.

22. Procédé selon au moins l'une des revendications 13 à 21, **caractérisé en ce que** l'adaptation de la vitesse de rotation normalisée est effectuée avec un taux prédéfini, de préférence inférieur à 1 * 1/min *1/s.

23. Procédé selon au moins l'une des revendications 13 à 22, **caractérisé en ce que** la réduction de la vitesse de rotation normalisée est réalisée en fonction des valeurs mesurées du capteur (11), notamment de la vitesse et/ou de la direction du vent.

24. Procédé selon au moins l'une des revendications 13 à 23, **caractérisé en ce que** la vitesse de rotation normalisée est de nouveau augmentée à la valeur optimale lorsque la vitesse du vent et/ou la vitesse de rotation des plateaux centrifuges demeure au-dessous d'une valeur limite pendant une période définie.
